# EUROPÄISCHE PATENTANMELDUNG

(11) **EP 1 339 161 A2**
(43) Veröffentlichungstag der Anmeldung: **27.08.2003**
(21) Anmeldenummer: 03001690.1
(22) Anmeldetag: 25.01.2003
(51) Int. Cl.: H02K 41/03, H02K 7/102

(54) **Linearantrieb**

(30) Priorität: 22.02.2002 DE 10207697
(71) Anmelder: INA-Schaeffler KG, 91074 Herzogenaurach (DE)
(72) Erfinder: Hestermann, Jörg-Oliver, 91074 Herzogenaurach (DE)

(57) **Zusammenfassung**

Linearantrieb mit einem Gehäuse (2) und mit einer Schiene (1, 24), die an dem Gehäuse (2) bewegbar gelagert ist, und mit an dem Gehäuse (2) und an der Schiene (1, 24) vorgesehenen Antriebselementen (4, 5, 6, 25) zur Erzeugung einer Relativbewegung zwischen dem Gehäuse (2) und der Schiene (1, 24), dadurch gekennzeichnet, dass das Gehäuse (2) eine Bremseinrichtung (9) für das Zusammenwirken mit einer an der Schiene (1, 24) vorgesehenen Bremsbahn (22) aufweist.

## Beschreibung

Die vorliegende Erfindung betrifft Linearantriebe, und zwar insbesondere solche Linearantriebe, wie sie in Werkzeugmaschinen als Vorschubeinheit zum Einsatz kommen. Beispielsweise sogenannte parallelkinematische Werkzeugmaschinen sind mit solchen Vorschubeinheiten in ihren Teleskoparmen ausgerüstet.

Aus WO 99/42245 A1 beispielsweise ist ein Linearantrieb gemäß den Merkmalen des Oberbegriffs des vorliegenden Anspruchs 1 bekannt geworden. Dieser Linearantrieb ist mit einem Träger und einem Trägergehäuse versehen, an dem der Träger längs bewegbar gelagert ist. An dem Träger und an dem Trägergehäuse sind Antriebselemente vorgesehen, zur Erzeugung einer Relativbewegung zwischen dem Träger und dem Trägergehäuse. Der Träger weist ein Doppel-T-Querschnittsprofil auf. Die Antriebselemente sind Primär- und Sekundärteile in Form von Spulen bzw. Magnete zur Ermöglichung eines elektrischen Direktantriebes. Diese Linearantriebe werden vorzugsweise für die Verwendung als Vorschubachsen in Parallelstrukturen eingesetzt. Bei einer Verwendung als Vorschubeinheit in Werkzeugmaschinen aber auch in anderen Anwendungen sind große Beschleunigungen und Verzögerungen des Linearantriebs erwünscht, um schnell und sicher eine gewünschte Stellposition zu erreichen. Der durch den Linearantrieb erzeugte Vorschub muss dann beendet sein, wenn eine gewünschte Stellposition erreicht ist. Bei den bekannten Linearantrieben kann das bestimmungsgemäße Positionieren - also auch das Abbremsen - über die Antriebselemente erfolgen. Im Fall eines Stromausfalles kann das Positionieren nicht mehr erfolgen.

Aufgabe der vorliegenden Erfindung ist es einen Linearantrieb nach den Merkmalen des Oberbegriffs des Anspruchs 1 anzugeben, bei dem ein schnelles und sicheres Stoppen des Linearantriebs insbesondere bei Stromausfall oder Notstopp gewährleistet ist.

Erfindungsgemäß wird diese Aufgabe dadurch gelöst, dass das Gehäuse eine zusätzliche Bremseinrichtung für das Zusammenwirken mit einer an der Schiene vorgesehenen Bremsbahn aufweist. Die Relativbewegung zwischen der Schiene und dem Gehäuse kann mit der erfindungsgemäß vorgesehenen Bremseinrichtung schnell und sicher bei Stromausfall bis zum Stillstand reduziert werden. Die Bremseinrichtung kann mit dem Gehäuse eine Baueinheit bilden, die problemlos beispielsweise in Werkzeugmaschinen zum Einsatz kommen kann. Bremseinrichtungen können mechanische Bremseinrichtungen sein, bei denen beispielsweise ein Bremsbelag mit der für eine mechanische Reibung ausgelegte Bremsbahn zusammenarbeitet. Die Bremse kann beispielsweise mittels Federkraft vorgespannt sein; in einer Situation, die ein sofortiges Stillstehen des Linearantriebs erfordert, kann die Bremse ausgelöst werden, wobei der Bremsbelag unter der Federkraft gegen die Bremsbahn angepresst wird. Derartige Situationen können beispielsweise bei Stromausfall oder in einer Gefahrensituation gegeben sein. Im ersten Fall kann der Stromausfall das Auslösen der Bremse bewirken; im zweiten Fall kann die Bremse über einen Notaus-Schalter betätigt werden, wobei auch die Antriebselemente abgeschaltet werden. Es können jedoch auch Bremseinrichtungen anderer Bauart zum Einsatz kommen.

Die Schiene kann in bekannter Weise über Wälzlager an dem Gehäuse gelagert sein, wobei entlang der Schiene Laufbahnen für Wälzkörper vorgesehen sind. In diesem Fall ist die Bremsbahn parallel zur Laufbahn angeordnet.

Für eine besonders platzsparende Bauweise bietet sich an, die Bremsbahn innerhalb der Laufbahn für die Wälzkörper anzuordnen. Die Schiene kann beispielsweise mit einer Nut versehen sein, wobei die Bremsbahn an der Nutwandung ausgebildet ist. Wenn beispielsweise eine mechanische Bremse eingesetzt wird, kann der Bremsbelag in die Nut hinein und gegen die Nutwandung angedrückt werden.

Wenn die Schiene beispielsweise ein rohrförmiges Querschnittsprofil aufweist, ist auch denkbar, dass Bremsbacken an zwei einander gegenüberliegenden Stellen der Schiene angeordnet sind, wobei an der Schiene entsprechende Bremsbahnen für beide Bremsbacken ausgebildet sind.

Entlang der Schiene kann auch eine Nut ausgebildet sein, wobei die Seitenwände als Kugelrille ausgebildet sind, und wobei der Nutgrund als Bremsbahn ausgebildet ist. Die Kugelrille kann als Laufbahn für Kugeln von bekannten Kugelumlaufeinheiten dienen, die an dem Gehäuse befestigt sind und endlos umlaufen. Dadurch das die Kugelrillen an den Seitenwänden der Nut angeordnet sind und dadurch der Nutgrund als Bremsbahn ausgebildet ist, steht deutlich mehr Umfangsfläche an der Schiene zur Verfügung, um beispielsweise Antriebselemente - also beispielsweise in Längsrichtung der Schiene hintereinander angeordnete Sekundärteile, beispielsweise Permanentmagnete-anzuordnen.

Der erfindungsgemäße Linearantrieb ist vorzugsweise mit einer Längenmesseinrichtung versehen, die einen an dem Gehäuse vorgesehenen Messkopf und eine an der Schiene vorgesehene Maßverkörperung umfasst. Die Maßverkörperung ist vorzugsweise nur an einer Stelle an der Schiene festgehalten, so dass Wärmedehnungen der Schiene nicht auf die Maßverkörperung übertragen werden.

Die Bremseinrichtung weist vorzugsweise einen Bremssattel auf, der einen mit einem Bremsbelag versehenen Bremskolben trägt. Diese Bremseinrichtung kann beispielsweise über einen elektrischen Stellantrieb aber auch hydraulisch oder mechanisch betätigt werden, wobei zum Erzielen einer Bremswirkung der Bremskolben aus dem Bremssattel herausgefahren wird und mit seinem Bremsbelag gegen die Bremsbahn angedrückt wird.

Ein besonders kompakter Linearantrieb ist als Baueinheit ausgebildet, bei der das Gehäuse die Bremseinrichtung, einen Messkopf einer Längenmesseinrichtung vorzugsweise in Verbindung mit einer an der Schiene angebrachten Maßverkörperung und Wälzkörperumlaufeinheiten zur Lagerung der Schiene an dem Gehäuse aufweist. Dieser so ausgerüstete Linearantrieb kann problemlos beispielsweise als Vorschubeinheit in Werkzeugmaschinen mit Parallelstrukturen zum Einsatz kommen.

Ein vom Gewicht her besonders leichter und dennoch steifer Linearantrieb sieht vor, dass das Gehäuse rohrförmig ausgebildet ist und an seinem Innenumfang mit einem oder mehreren Primärteilen versehen ist, das insbesondere durch eine oder mehrere von einem elektrischen Strom beaufschlagbare Erregerwicklungen gebildet sein kann. Grundsätzlich können die Primärteile symmetrisch angeordnet sein, so dass Anziehungskräfte quer zur Schiene im Gleichgewicht stehen. Allerdings sind auch asymmetrische Anordnungen denkbar.

Mehrere Primärteile sind dann in Umfangsrichtung mit umfangsseitigen Abstand zueinander angeordnet, wobei in dem Abstandsbereich der Messkopf, die Bremseinrichtung und die Wälzkörperumlaufeinheiten untergebracht sein können.

Als weiterer Beitrag für einen vom Gewicht her besonders leichten und dennoch steifen Linearantrieb ist vorgesehen, dass die Schiene ein rohrförmiges Querschnittsprofil aufweist, wobei auf dem Außenumfang der Schiene das insbesondere durch Permanentmagnete gebildete Sekundärteile angebracht sind. Für diese Schienen können genormte Rohre als Halbzeug verwendet werden, wobei sich beispielsweise die weiter oben erwähnte Laufbahn für Wälzkörper problemlos einschleifen lässt.

Die Sekundärteile können in Umfangsrichtung mit anfangsseitigen Abstand zueinander angeordnet sein, wobei in dem Abstandsbereich die Bremsbahn für die Bremseinrichtung und die Laufbahnen für die Wälzkörper angeordnet sind.

Nachstehend wird die Erfindung anhand von zwei in insgesamt fünf Figuren dargestellten Ausführungsbeispielen näher erläutert. Es zeigen:
- Figur 1: eine perspektivische Darstellung eines erfindungsgemäßen Linearantriebs,
- Figur 2: den Linearantrieb aus Figur 1, jedoch ohne Gehäuse,
- Figur 3: einen Querschnitt durch den erfindungsgemäßen Linearantrieb aus Figur 1,
- Figur 4: eine Ausschnittsvergrößerung des in Figur 5 abgebildeten Querschnitts und
- Figur 5: einen weiteren erfindungsgemäßen Linearantrieb in perspektivischer Darstellung.

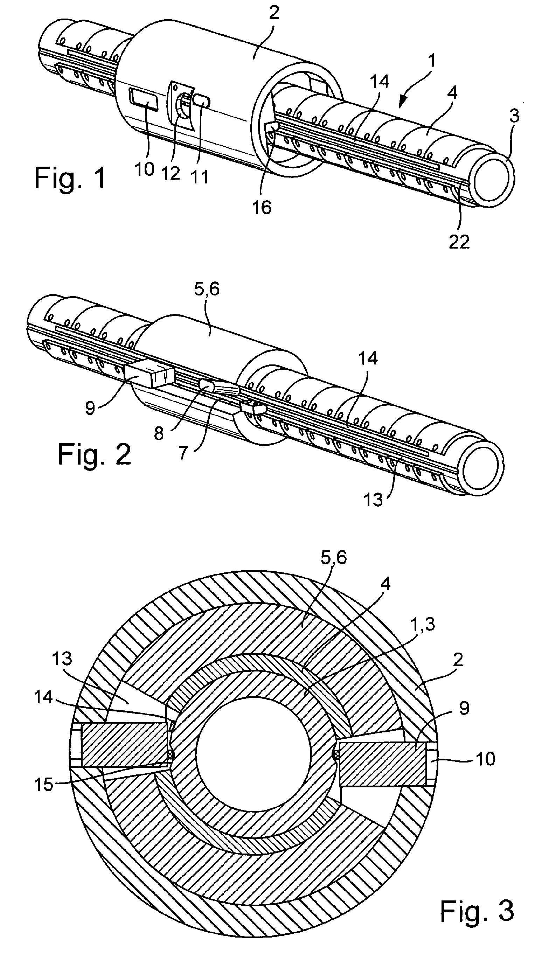

Figur 1 zeigt in perspektivischer Darstellung einen erfindungsgemäßen Linearantrieb. Eine im Querschnitt rohrförmige Schiene 1 ist längsverschieblich in einem röhrförmigen Gehäuse 2 angeordnet. Die Schiene 1 ist durch ein Rohr 3 gebildet. Endlang des Rohres 3 sind mehrere hintereinander angeordnete Permanentmagnete 4 angeordnet, die Sekundärteile bilden.

Figur 2 zeigt den erfindungsgemäßen Linearantrieb, jedoch ist das Gehäuse 2 weggelassen. Dieser Figur ist zu entnehmen, dass zwei kreissegmentförmige Primärteile 5 vorgesehen sind, die durch mehrere mit einem elektrischen Strom beaufschlagbare Spulen 6 gebildet sind. Die Primärteile 5 sind in Umfangsrichtung mit umfangsseitigen Abstand zueinander angeordnet, wobei im Abstandsbereich 7 ein Messkopf 8 eines Längenmesssystems und eine Bremseinrichtung 9 angeordnet sind. Der Messkopf 8 und die Bremseinrichtung 9 sind in Ausnehmungen 10, 11 des Gehäuses 2 angeordnet, wie dies der Figur 1 zu entnehmen ist. Der Figur 1 ist ferner zu entnehmen, dass zwischen diesen Ausnehmungen 10, 11 an dem Gehäuse 2 eine Aufnahme 12 für ein nicht weiter dargestelltes Kardanlager zur kardanischen Aufhängung des Linearantriebes vorgesehen ist.

Den Figuren 1 bis 3 ist zu entnehmen, dass sich jeweils zwei schalenförmige Permanentmagnete 4 umfangsseitig einander gegenüberliegen an dem Rohr 3 angeordnet sind. Zwischen diesen paarweise angeordneten Permanentmagneten sind Abstandsbereiche 13, wie dies in der Figur 2 dargestellt ist. In einem der Unterbrechungsbereiche 13 ist eine Maßverkörperung 14 vorgesehen, die parallel zur Längsachse des Rohres 3 angeordnet ist, und die an lediglich einer Stelle an dem Rohr 3 befestigt ist. Diese Maßverkörperung 14 arbeitet mit dem oben erwähnten Messkopf 8 zusammen, so dass ein Längenmesssystem gebildet ist, um eine Relativverschiebung zwischen der Schiene 1 und dem Gehäuse 2 messen zu können. Ein Auswerteeinheit, Wandler u.s.w sind hier nicht näher erläutert.

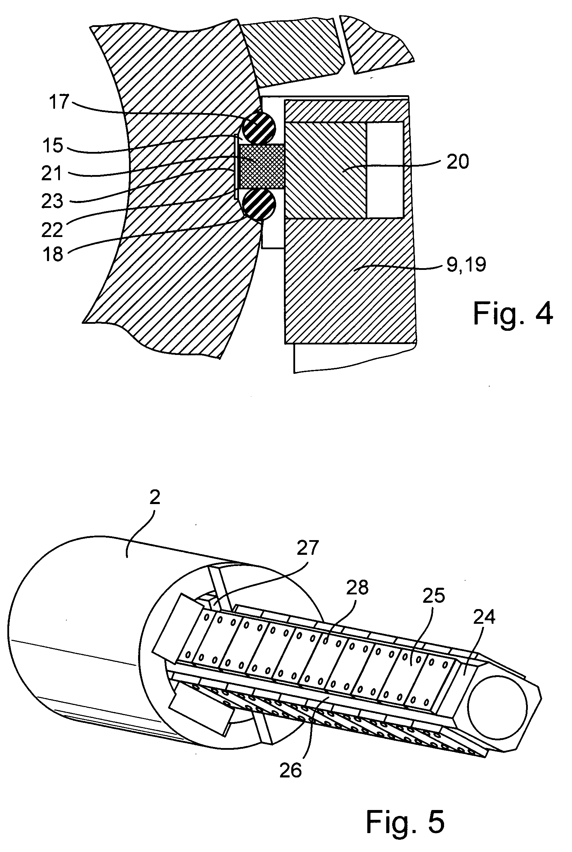

Ferner sind in beiden einander gegenüberliegenden Abstandsbereichen 13 parallel zur Längsachse des Rohres 3 Nuten 15 in das Rohr 3 eingebracht, wie dies insbesondere der Figur 4 deutlich zu entnehmen ist.

Zur einwandfreien Lagerung der Schiene 1 an dem Gehäuse 2 sind mehrere Lagerstellen vorgesehen, die hier z. B. durch an sich bekannte Kugelumlaufeinheiten 16 ausgebildet sind. Die Kugelumlaufeinheiten 16 sind an das Gehäuse 2 angeflanscht, wie dies in der Figur 1 angedeutet ist. An beiden axialen Enden des Gehäuses 2 sind jeweils an umfangsseitig einander gegenüberliegenden Stellen zwei dieser Kugelumlaufeinheiten 16 angeordnet. Der Figur 4 ist zu entnehmen, dass die Kugeln 17 der Kugelumlaufeinheiten 16 an Kugelrillen 18 abwälzen, wobei die Kugelrillen 18 durch die Seitenwände der Nut 15 gebildet sind. Zwei einander benachbart angeordnete Kugelrillen 18 bilden ein Kugelrillenpaar. Im Ausführungsbeispiel sind zwei Kugelrillenpaare diametral einander gegenüberliegend angeordnet. Auf diese Weise ist in Umfangsrichtung zwischen den beiden Kugelrillenpaaren eine möglichst große freie Umfangsfläche geschaffen, um Sekundärteile darauf anzubringen. Die beiden Kugelrillen 18 eines Kugelrillenpaares sind spiegelsymmetrisch zu einer Ebene angeordnet, die parallel zur Schiene 1 verläuft, wobei im Ausführungsbeispiel die Längsachse des Rohres 3 in dieser Ebene liegt.

Weiter oben wurde bereits erwähnt, dass der erfindungsgemäße Linearantrieb mit einer Bremseinrichtung 9 versehen ist. Diese Bremseinrichtung 9 ist in der Figur 4 ebenfalls deutlich dargestellt. Sie umfasst einen Bremssattel 19, der in der Ausnehmung 10 des Gehäuses 2 befestigt ist. In diesem Bremssattel 19 ist ein Bremskolben 20 verschiebbar angeordnet, wobei der Bremskolben 20 an seinem aus dem Bremssattel 19 herausragenden Ende mit einem Bremsbelag 21 versehen ist. Der Bremsbelag 21 greift zwischen zwei Kugelreihen ein, die von Kugeln 17 einer oder mehrerer Kugelumlaufeinheiten 16 gebildet sind. Der Bremsbelag 21 arbeitet mit einer Bremsbahn 22 zusammen, die sich parallel zur Längsachse der Schiene 1 erstreckt, wobei der Nutgrund 23 der Nut 15 die Bremsbahn 22 bildet. Der Bremskolben 20 kann elektrisch, pneumatisch, hydraulisch oder mechanisch beaufschlagt werden. Wenn der Bremskoben 20 beaufschlagt wird, greift der Bremsbelag 21 an der Bremsbahn 22 an, um eine Relativbewegung zwischen der Schiene 1 und dem Gehäuse 2 schnell zu stoppen. Die Betätigung der Bremseinrichtung 9 erfolgt automatisch bei Stromabschaltung, also bei stromlosen Linearantrieb, oder bei Betätigung eines Not-Aus-Schalters.

Der in Figur 5 in perspektivischer Darstellung abgebildete erfindungsgemäße Linearantrieb unterscheidet sich von dem oben beschriebenen Linearantrieb im Wesentlichen dadurch, dass anstelle einer Schiene 1 mit rohrförmigem Querschnitt eine Schiene 24 mit quadratischem Querschnitt gebildet ist. Bei dieser Schiene 24 sind am Umfang vier ebene Flächen gebildet, die parallel zur Längsachse der Schiene 24 ausgebildet sind. In vorteilhafter Weise können handelsübliche flache Permanentmagnete 25 auf diese Flächen aufgebracht werden. Anstelle der Permanentmagnete können auch andere Sekundärteile zum Einsatz kommen. In den Eckbereichen der Schiene 24 - also dort wo zwei einander benachbarte rechtwinkelig aufeinanderstehende Flächen der Schiene 24 sich schneiden - ist die Schiene 24 mit Fasen 26 versehen. Ebenso wie die in dem oben beschriebenen Ausführungsbeispiel ausgeführt ist, sind an diesen Fasen 26 Laufbahnen für Wälzkörper, Bremsbahnen für die Bremseinrichtung und eine Maßverkörperung für die Längenmesseinrichtung vorgesehen. In der Figur 5 ist eine Kugelumlaufeinheit 27 lediglich angedeutet, die an dem Gehäuse 2 befestigt ist. Die nicht weiter dargestellten Kugeln der Kugelumlaufeinheit 27 wälzen an einer als Kugelrille 28 ausgebildeten Fase 26 ab.

### Bezugszahlen

- 1: Schiene
- 2: Gehäuse
- 3: Rohr
- 4: Permanentmagnet
- 5: Primärteil
- 6: Spule
- 7: Abstandsbereich
- 8: Messkopf
- 9: Bremseinrichtung
- 10: Ausnehmung
- 11: Ausnehmung
- 12: Aufnahme
- 13: Abstandsbereich
- 14: Maßverkörperung
- 15: Nut
- 16: Kugelumlaufeinheit
- 17: Kugel
- 18: Kugelrille
- 19: Bremssattel
- 20: Bremskolben
- 21: Bremsbelag
- 22: Bremsbahn
- 23: Nutgrund
- 24: Schiene
- 25: Primärteil
- 26: Fase
- 27: Kugelumlaufeinheit
- 28: Kugelrille

## Patentansprüche

1. Linearantrieb mit einem Gehäuse (2) und mit einer Schiene (1, 24), die an dem Gehäuse (2) bewegbar gelagert ist, und mit an dem Gehäuse (2) und an der Schiene (1, 24) vorgesehenen Antriebselementen (4, 5, 6, 25) zur Erzeugung einer Relativbewegung zwischen dem Gehäuse (2) und der Schiene (1, 24), **dadurch gekennzeichnet, dass** das Gehäuse (2) eine Bremseinrichtung (9) für das Zusammenwirken mit einer an der Schiene (1, 24) vorgesehenen Bremsbahn (22) aufweist.

2. Linearantrieb nach Anspruch 1, bei dem die Schiene (1, 24) über Wälzlager (16, 27) an dem Gehäuse (2) gelagert ist, wobei entlang der Schiene (1, 24) Laufbahnen (18, 28) für Wälzkörper (17) vorgesehen sind, und wobei die Bremsbahn (22) parallel zur Laufbahn (18, 28) angeordnet ist.

3. Linearantrieb nach Anspruch 2, bei dem die Bremsbahn (22) innerhalb der Laufbahn (18, 28) angeordnet ist.

4. Linearantrieb nach Anspruch 3, bei dem innerhalb der Laufbahn (18, 28) und parallel zu ihr eine Nut (15) in der Schiene (1) vorgesehen ist, wobei die Bremsbahn (22) an der Nutwandung gebildet ist.

5. Linearantrieb nach Antrieb 3, bei dem entlang der Schiene (1) eine Nut (15) ausgebildet ist, wobei die Seitenwände als Kugelrille (18) ausgebildet sind, und wobei der Nutgrund (23) als Bremsbahn (22) ausgebildet ist.

6. Linearantrieb nach Anspruch 1, bei dem eine Längenmesseinrichtung vorgesehen ist, die einen an dem Gehäuse (1) vorgesehenen Messkopf (8) und eine an der Schiene (1) vorgesehene Maßverkörperung (14) umfasst.

7. Linearantrieb nach Anspruch 1, bei dem die Bremseinrichtung (9) einen Bremssattel (19) umfasst, der einen mit einem Bremsbelag (21) versehenen Bremskolben (20) trägt.

8. Linearantrieb nach Anspruch 1, bei der eine Baueinheit gebildet ist, bei der das Gehäuse (2) die Bremseinrichtung (9), einen Messkopf (8) einer Längenmesseinrichtung und Wälzkörperumlaufeinheiten (16, 27) zur Lagerung der Schiene (1) an dem Gehäuse (2) aufweist.

9. Linearantrieb nach Anspruch 8, bei dem das Gehäuse (2) rohrförmig ausgebildet ist und an seinem Innenumfang mit einem Primärteil (5), insbesondere eine von einem elektrischen Strom beaufschlagbare Erregerwicklung versehen ist.

10. Linearantrieb nach Anspruch 9, bei dem mehrere Primärteile (5) in Umfangsrichtung mit umfangsseitigem Abstand zueinander angeordnet sind, wobei in dem Abstandsbereich (13) der Messkopf (8), die Bremseinrichtung (9) und die Wälzkörperumlaufeinheiten (16, 27) untergebracht sind.

11. Linearantrieb nach Anspruch 1, bei dem die Schiene (1) ein rohrförmiges Querschnittsprofil aufweist, wobei auf dem Außenumfang der Schiene (1) das insbesondere durch Permanentmagnete (4) gebildete Sekundärteil angebracht sind.

12. Linearantrieb nach den Ansprüchen 2 und 11, bei dem mehrere Sekundärteile in Umfangsrichtung mit umfangsseitigem Abstand zueinander angeordnet sind, wobei in dem Abstandsbereich (7) die Bremsbahn (22) für die Bremseinrichtung (9) und die Laufbahnen (18, 28) für die Wälzkörper (17) angeordnet sind.
